# EUROPEAN PATENT APPLICATION

(11) **EP 4 738 501 A1**
(43) Date of publication of application: **06.05.2026**
(21) Application number: 25827217.8
(22) Date of filing: 25.03.2025
(51) Int. Cl.: H01M 10/04, H01M 10/058, H01M 50/105

(54) **PRESSING DEVICE FOR POUCH-TYPE SECONDARY BATTERY, AND PRESSING METHOD USING SAME**

(30) Priority: 27.06.2024 KR 20240084885
(71) Applicant: LG Energy Solution, Ltd., Seoul 07335 (KR)
(72) Inventor: LEE, Young Hwan, Daejeon 34122 (KR)
(74) Representative: Goddar, Heinz J.
(86) International application number: PCT/KR2025/003808
(87) International publication number: WO 2026/005195

(57) **Abstract**

Disclosed are a pouch-shaped secondary battery pressing apparatus for pressing a pouch-shaped secondary battery including a first pocket portion configured to receive an electrode assembly having a pair of electrode leads opposite to each other and a first sealed portion at an edge of the first pocket portion, the pouch-shaped secondary battery pressing apparatus including a first pressing unit configured to press one surface of the first pocket portion and a second pressing unit configured to press an other surface of the first pocket portion, wherein the first pressing unit has a first pressing pad with a plurality of first embossments facing the one surface of the first pocket portion, and the second pressing unit has a second pressing pad with a plurality of second embossments facing the other surface of the first pocket portion, and a pressing method using the same.

## Description

### [Technical Field]

This application claims the benefit of priority to Korean Patent Application No. 10-2024-0084885 filed on June 27, 2024, the disclosure of which is incorporated herein by reference in its entirety.

The present invention relates to a pouch-shaped secondary battery pressing apparatus and a pressing method using the same, and more particularly to a pouch-shaped secondary battery pressing apparatus capable of uniformly pressing the entirety of a pouch-shaped secondary battery to remove gas from a case and a pressing method using the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of an aluminum laminate sheet.

A typical pouch-shaped secondary battery manufacturing process includes inserting an electrode assembly into a receiving space of a battery case made of a laminate sheet, injecting an electrolyte solution into the battery case, sealing the battery case, and performing an activation process.

When the electrolyte solution is injected, however, gas in the case or bubbles generated during the injection process may prevent the electrode assembly from being sufficiently impregnated with the injected electrolyte solution, which causes a part that cannot be charged and discharged to occur even after the activation process, resulting in a decrease in the battery capacity.

Of course, even during the activation process, a large amount of gas is generated due to chemical reactions and side reactions between the electrolyte solution and electrodes.

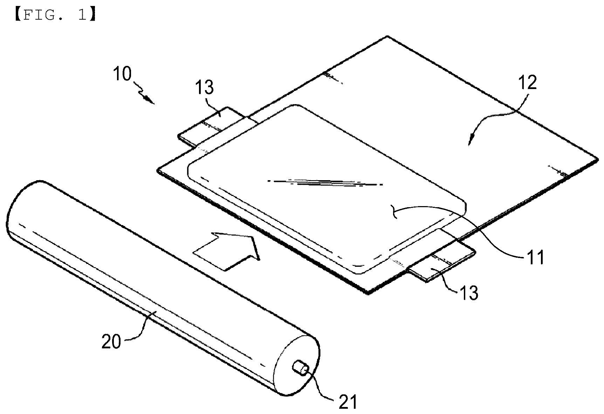

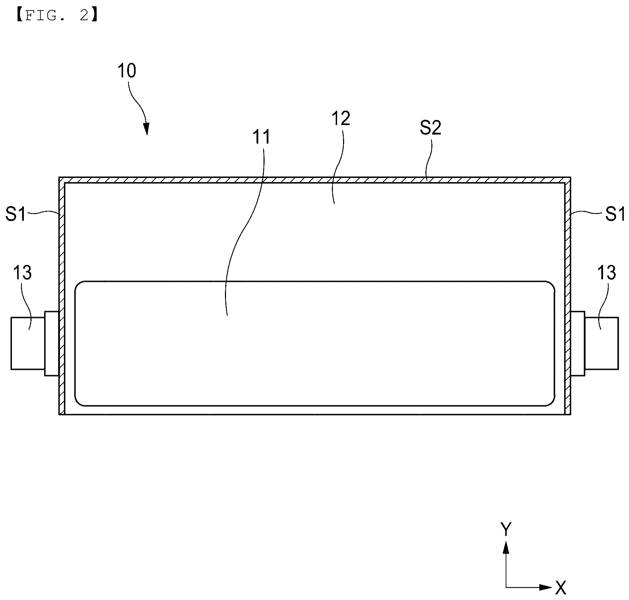

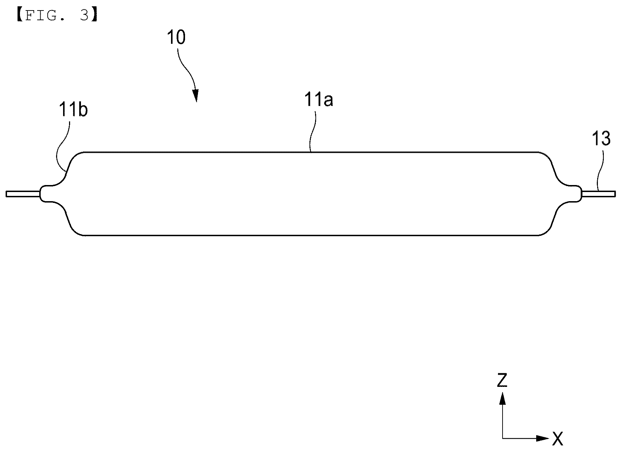

FIG. 1 is a conceptual view showing a part of a conventional secondary battery pressing apparatus, FIG. 2 is a plan view illustrating a pouch-shaped secondary battery, and FIG. 3 is a side view illustrating the pouch-shaped secondary battery.

As shown in FIGs. 1 to 3, during degassing roller pressing of the pouch-shaped secondary battery 10, a pressing roller 20 presses a first pocket portion 11, whereby gas located in the first pocket portion 11 is moved to the second pocket portion 12 and removed.

However, the apparatus is complicated because the pressing rollers 20 must be located on both sides of the first pocket portion 11 and the pressing rollers 20 must be driven relative to the first pocket portion 11 in vertical and horizontal directions.

### (Prior Art Document)

(Patent Document 1) Korean Patent Application Publication No. 10-2018-0025805

### [Disclosure]

### [Technical Problem]

The present invention has been made in view of the above problems, and it is an object of the present invention to provide a pouch-shaped secondary battery pressing apparatus capable of easily removing gas generated in an electrolyte solution injection process or an activation process while having a simple structure and a pressing method using the same.

### [Technical Solution]

As a technical means for achieving the above object, a pouch-shaped secondary battery pressing apparatus according to an embodiment of the present invention, which is a pouch-shaped secondary battery pressing apparatus for pressing a pouch-shaped secondary battery (10) including a first pocket portion (11) configured to receive an electrode assembly having a pair of electrode leads (13) opposite to each other and a first sealed portion (S1) at an edge of the first pocket portion (11), includes a first pressing unit (100) configured to press one surface of the first pocket portion (11) and a second pressing unit (200) configured to press an other surface of the first pocket portion (11), wherein the first pressing unit (100) has a first pressing pad (110) with a plurality of first embossments (111) facing the one surface of the first pocket portion (11), and the second pressing unit (200) has a second pressing pad (210) with a plurality of second embossments (211) facing the other surface of the first pocket portion (11).

Also, in the pouch-shaped secondary battery pressing apparatus according to the embodiment of the present invention, when the pouch-shaped secondary battery (10) is in a vertical direction, the first embossments (111) and the second embossments (211) may be closer to the first pocket portion (11) with decreasing distance from a lower side.

Also, in the pouch-shaped secondary battery pressing apparatus according to the embodiment of the present invention, the first embossments (111) and the second embossments (211) may have protruding heights gradually increasing with decreasing distance from the lower side.

Also, in the pouch-shaped secondary battery pressing apparatus according to the embodiment of the present invention, each of the first pressing pad (110) and the second pressing pad (210) may be made of an elastic member.

Also, in the pouch-shaped secondary battery pressing apparatus according to the embodiment of the present invention, the elastic member may include a silicone material.

Also, in the pouch-shaped secondary battery pressing apparatus according to the embodiment of the present invention, the first embossments (111) and the second embossments (211) may be configured to temporarily flatten when contacting the first pocket portion (11).

Also, in the pouch-shaped secondary battery pressing apparatus according to the embodiment of the present invention, the first pressing pad (110) may include a first ridge portion (112) configured to press a rounded sliding portion (11b) of the one surface of the first pocket portion (11), and the second pressing pad (210) may include a second ridge portion (212) configured to press a rounded sliding portion (11b) of the other surface of the first pocket portion (11).

Also, in the pouch-shaped secondary battery pressing apparatus according to the embodiment of the present invention, each of the first ridge portion (112) and the second ridge portion (212) may be in a shape corresponding to the rounded shape of the sliding portion (11b).

Also, in the pouch-shaped secondary battery pressing apparatus according to the embodiment of the present invention, the first pressing unit (100) may include a first pressing plate (120) at one surface of the first pressing pad (110), the first pressing plate being configured to support the first pressing pad (110), and the second pressing unit (200) may include a second pressing plate (220) at an other surface of the second pressing pad (210), the second pressing plate being configured to support the second pressing pad (210).

Also, the pouch-shaped secondary battery pressing apparatus according to the embodiment of the present invention may further include a driving unit (300) including a first driving member (310) configured to drive the first pressing unit (100) and a second driving member (320) configured to drive the second pressing unit (200), wherein the first driving member (310) may be connected to one surface of the first pressing plate (120) and may be configured to move the first pressing pad (110) so as to face the one surface of the first pocket portion (11), and the second driving member (320) may be connected to the other surface of the second pressing plate (220) and may be configured to move the second pressing pad (210) so as to face the other surface of the first pocket portion (11).

In addition, a pouch-shaped secondary battery pressing method using the pouch-shaped secondary battery pressing apparatus according to the embodiment of the present invention includes (S1) locating a pouch-shaped secondary battery (10) between the first pressing unit (100) and the second pressing unit (200), (S2) operating the first driving member (310) and the second driving member (320) to move the first pressing unit (100) and the second pressing unit (200) to one surface and an other surface of the pouch-shaped secondary battery (10), respectively, and (S3) pressing a first pocket portion (11) by the first pressing pad (110) and the second pressing pad (210).

Also, in the pouch-shaped secondary battery pressing method according to the embodiment of the present invention, in step (S3), a lower side of the first pocket portion (11) may first contact the first pressing pad (110) and the second pressing pad (210).

Also, in the pouch-shaped secondary battery pressing method according to the embodiment of the present invention, in step (S3), the first pressing pad (110) and the second pressing pad (210) may contact sliding portions (11b) of the one surface and the other surface of the first pocket portion (11).

### [Advantageous Effects]

As is apparent from the above description, a pouch-shaped secondary battery pressing apparatus according to the present invention and a pressing method using the same have the advantage that a first pocket portion configured to receive an electrode assembly may be pressed by only horizontal or vertical reciprocating movement of a pressing unit driven by a driving unit to press one surface and the other surface of the first pocket portion, whereby the apparatus has a simple structure.

In addition, the pouch-shaped secondary battery pressing apparatus according to the present invention and the pressing method using the same have the advantage that the pressing unit configured to press one surface and the other surface of the first pocket portion configured to receive the electrode assembly is provided with an embossed pressing pad, whereby it is possible to effectively remove gas from the first pocket portion.

In addition, the pouch-shaped secondary battery pressing apparatus according to the present invention and the pressing method using the same have the advantage that embossments of the pressing pad have protruding heights gradually increasing toward the lower side and have protruding heights gradually decreasing toward the upper side, whereby gas may be easily discharged and efficiency of impregnation of the electrode assembly with an electrolyte solution is also improved.

Furthermore, the pouch-shaped secondary battery pressing apparatus according to the present invention and the pressing method using the same have the merit that the pressing pad includes a ridge portion configured to press a rounded sliding portion of the first pocket portion, whereby even gas in the sliding portion may be removed.

### [Description of Drawings]

FIG. 1 is a conceptual view showing a part of a conventional secondary battery pressing apparatus.
FIG. 2 is a plan view illustrating a pouch-shaped secondary battery.
FIG. 3 is a side view illustrating the pouch-shaped secondary battery.
FIG. 4 is a front view showing the state in which a pressing apparatus according to a first embodiment of the present invention is located on one side and the other side of a first pocket portion of a pouch-shaped secondary battery.
FIG. 5 is a perspective view of a first pressing unit of the pressing apparatus according to the first embodiment of the present invention.
FIG. 6 is a front view showing that the pressing apparatus according to the first embodiment of the present invention presses the first pocket portion of the pouch-shaped secondary battery.
FIG. 7 is a front view of a modification of the first embodiment of the present invention, illustrating that a first pressing pad is received in a receiving portion of a first pressing plate.
FIG. 8 is a front view showing the state in which a pressing apparatus according to a second embodiment of the present invention is located on one side and the other side of a first pocket portion of a pouch-shaped secondary battery.
FIG. 9 is a perspective view of a first pressing unit of the pressing apparatus according to the second embodiment of the present invention.
FIG. 10 is a front view showing that the pressing apparatus according to the second embodiment of the present invention presses the first pocket portion of the pouch-shaped secondary battery.
FIG. 11 is a view showing the state in which a pressing apparatus according to a third embodiment of the present invention is located on one side and the other side of a first pocket portion of a pouch-shaped secondary battery, when viewed from above.
FIG. 12 is a perspective view of a first pressing unit of the pressing apparatus according to the third embodiment of the present invention.
FIG. 13 is a view showing that the pressing apparatus according to the third embodiment of the present invention presses the first pocket portion of the pouch-shaped secondary battery.
FIG. 14 is a flowchart illustrating a method of pressing a pouch-shaped secondary battery using the pressing apparatus according to the present invention.

### [Best Mode]

Now, preferred embodiments of the present invention will be described in detail with reference to the accompanying drawings such that the preferred embodiments of the present invention may be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a predetermined element is included does not mean that other elements are excluded, but means that such elements may be further included unless mentioned otherwise.

Hereinafter, a pouch-shaped secondary battery pressing apparatus according to the present invention and a pressing method using the same will be described.

First, referring to FIGs. 2 and 3, a pouch-shaped secondary battery 10 includes a first pocket portion 11 configured to receive an electrode assembly (not shown) having a pair of electrode leads 13 located opposite each other, a first sealed portion S1 provided at an edge of the first pocket portion 11, a second pocket portion 12 configured to capture gas, and a second sealed portion S2 provided at an edge of the second pocket portion 12.

The first sealed portion S1 may be formed by sealing the edge on both sides (3 o'clock to 9 o'clock direction in to FIG. 2) of the first pocket portion 11 where the pair of electrode leads 13 is located, and the second sealed portion S2 may be formed by sealing the edge on an upper side (12 o'clock direction in FIG. 2) of the second pocket portion 12 where the pair of electrode leads 13 does not protrude.

The pair of electrode leads 13 may include a positive electrode lead and a negative electrode lead.

Meanwhile, in the pouch-shaped secondary battery, each of the first pocket portion 11 and the second pocket portion 12 is formed using a laminate sheet including an outer covering layer, a metal layer, and an inner covering layer.

The inner covering layer is in direct contact with the electrode assembly, and therefore the inner covering layer must exhibit high insulation properties and high electrolytic resistance. In addition, the inner covering layer must exhibit high sealability in order to hermetically isolate the battery case from the outside, i.e., a thermally-bonded sealed portion between inner layers must exhibit excellent thermal bonding strength.

The inner covering layer may be made of a material selected from among a polyolefin-based resin, such as polypropylene, polyethylene, polyethylene acrylic acid, or polybutylene, a polyurethane resin, and a polyimide resin, which exhibit excellent chemical resistance and high sealability; however, the present invention is not limited thereto, and polypropylene, which exhibits excellent mechanical properties, such as tensile strength, rigidity, surface hardness, and impact resistance, and excellent chemical resistance, is the most preferably used.

The metal layer, which abuts the inner covering layer, corresponds to a barrier layer configured to prevent moisture or various gases from permeating into the battery from the outside. An aluminum thin film, which is lightweight and easily shapeable, may be used as a preferred material for the metal layer.

The outer covering layer is provided at the other surface of the metal layer, and the outer covering layer may be made of a heat-resistant polymer that exhibits excellent tensile strength, resistance to moisture permeation, and resistance to air transmission such that the outer covering layer exhibits high heat resistance and chemical resistance while protecting the electrode assembly. As an example, the outer covering layer may be made of nylon or polyethylene terephthalate; however, the present invention is not limited thereto.

Meanwhile, the electrode assembly received in the first pocket portion 11 may be a jelly-roll type electrode assembly, which is configured to have a structure in which a long sheet type negative electrode and a long sheet type positive electrode are wound in the state in which a separator is interposed therebetween, a stacked type electrode assembly including unit cells, each of which is configured to have a structure in which a rectangular positive electrode and a rectangular negative electrode are stacked in the state in which a separator is interposed therebetween, a stacked and folded type electrode assembly, which is configured to have a structure in which unit cells are wound using a long separation film, or a laminated and stacked type electrode assembly, which is configured to have a structure in which unit cells are stacked in the state in which a separator is interposed therebetween and are then attached to each other; however, the present invention is not limited thereto.

The positive electrode includes a positive electrode current collector and a positive electrode active material applied to each of an upper surface and a lower surface of the positive electrode current collector. The positive electrode active material may be mixed with a conductive agent and a binder, and a filler may be further added if necessary.

The negative electrode includes a negative electrode current collector and a negative electrode active material applied to each of an upper surface and a lower surface of the negative electrode current collector. The negative electrode active material may be further mixed with a conductive agent and a binder, and the negative electrode current collector may be coated with the mixture.

The separator prevents short circuit between the negative electrode and the positive electrode and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

Meanwhile, in manufacturing the electrode constituting the electrode assembly, an electrode material is coated in a slurry state, and due to fluidity of the slurry, a central portion of the electrode is flat while the edge of the electrode becomes thinner so that a so-called sliding region of the electrode may be formed.

Accordingly, the first pocket portion 11 in which the electrode assembly is received may be provided with a flat portion 11a corresponding to the central portion of the electrode flatly coated with the slurry and a sliding portion 11b corresponding to the sliding region of the electrode.

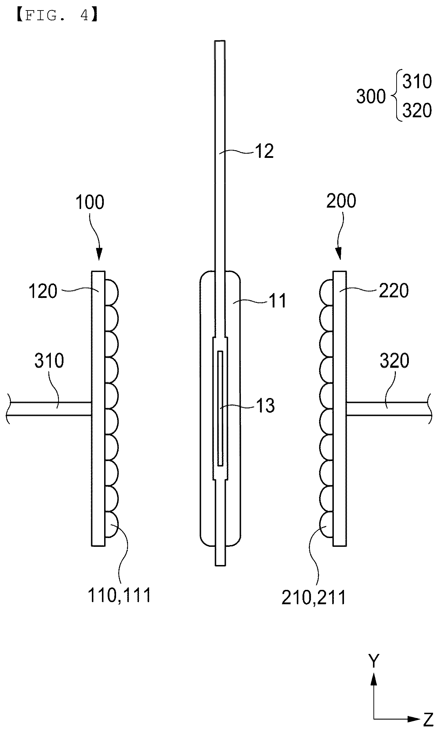

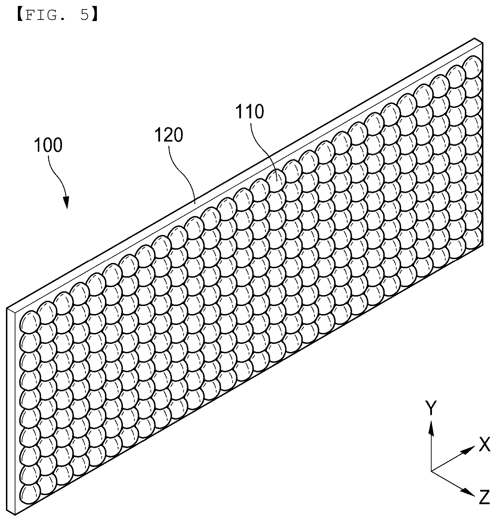

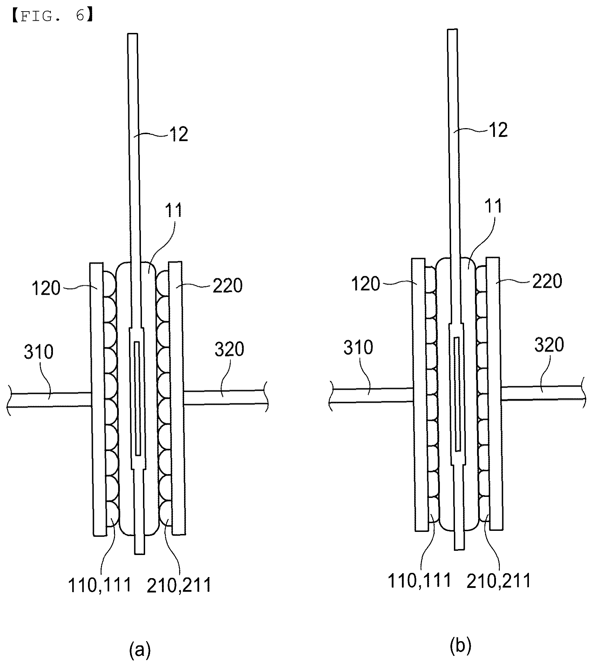

FIG. 4 is a front view showing the state in which a pressing apparatus according to a first embodiment of the present invention is located on one side and the other side of a first pocket portion of a pouch-shaped secondary battery, FIG. 5 is a perspective view of a first pressing unit of the pressing apparatus according to the first embodiment of the present invention, and FIG. 6 is a front view showing that the pressing apparatus according to the first embodiment of the present invention presses the first pocket portion of the pouch-shaped secondary battery.

The pouch-shaped secondary battery pressing apparatus according to the first embodiment of the present invention for pressing the first pocket portion 11 of the pouch-shaped secondary battery 10 having the aforementioned configuration may include a first pressing unit 100, a second pressing unit 200, and a driving unit 300.

The first pressing unit 100 and the second pressing unit 200 may be configured to contact each other with a first pocket portion 11 therebetween in the state in which the pouch-shaped secondary battery 10 is located in a vertical direction (12 o'clock to 6 o'clock direction in FIG. 4). At this time, the first pressing unit 100 may be configured to press one surface (9 o'clock direction in FIG. 4) of the first pocket portion 11, and the second pressing unit 200 may be configured to press the other surface (3 o'clock direction in FIG. 4) of the first pocket portion 11.

First, the first pressing unit 100 may include a first pressing pad 110 and a first pressing plate 120. The first pressing pad 110 may be configured to contact one surface of the first pocket portion 11 and to press the one surface of the first pocket portion 11.

The first pressing pad 110 may be made of an elastic member. For example, the first pressing pad 110 may be made of an elastic member such that the first pressing pad can be compressed when pressing one surface of the first pocket portion 11 and the shape of the first pressing pad can be restored by elastic resilience when pressing is released. More specifically, the elastic member may be made of a material that is heat and pressure resistant while being easily deformable, such as silicone.

The first pressing pad 110 may be provided with a plurality of first embossments 111 facing one surface of the first pocket portion 11, more specifically, with a center portion of the first embossment 111 convexly projecting toward one surface of the first pocket portion 11.

For example, the first embossment 111 may be formed in a circular shape when viewed from one side; however, the present invention is not limited thereto, and the first embossment may be formed in a variety of shapes.

In addition, as shown in FIG. 6, the other surface of the first embossment 111, which convexly protrudes, may be flattened when the first pressing pad 110 presses the first pocket portion 11 after contacting one surface of the first pocket portion 11, whereby the convex surface may temporarily become flat.

The first pressing plate 120 may be disposed at one surface of the first pressing pad 110 to support the first pressing pad 110. For example, the first pressing plate 120 may be made of a material having stiffness sufficient to support the first pressing pad 110 when the first pressing pad presses one surface of the first pocket portion 11.

The second pressing unit 200 may include a second pressing pad 210 and a second pressing plate 220. The second pressing pad 210 may be configured to contact the other surface of the first pocket portion 11 and to press the other surface of the first pocket portion 11.

The second pressing pad 210 may be made of an elastic member. For example, the second pressing pad 210 may be made of an elastic member such that the second pressing pad can be compressed when pressing the other surface of the first pocket portion 11 and the shape of the second pressing pad can be restored by elastic resilience when pressing is released. More specifically, the elastic member may be made of a material that is heat and pressure resistant while being easily deformable, such as silicone.

The second pressing pad 210 may be provided with a plurality of second embossments 211 facing the other surface of the first pocket portion 11, more specifically, with a center portion of the second embossment 211 convexly projecting toward the other surface of the first pocket portion 11.

For example, the second embossment 211 may be formed in a circular shape when viewed from the other side; however, the present invention is not limited thereto, and the second embossment may be formed in a variety of shapes.

In addition, as shown in FIG. 6, one surface of the second embossment 211, which convexly protrudes, may be flattened when the second pressing pad 210 presses the first pocket portion 11 after contacting the other surface of the first pocket portion 11, whereby the convex surface may temporarily become flat.

The second pressing plate 220 may be disposed at the other surface of the second pressing pad 210 to support the second pressing pad 210. For example, the second pressing plate 220 may be made of a material having stiffness sufficient to support the second pressing pad 210 when the second pressing pad presses the other surface of the first pocket portion 11.

The driving unit 300 may include a first driving member 310 and a second driving member 320.

First, the first driving member 310 may be configured to drive the first pressing unit 100. More specifically, the first driving member 310 may be connected to one surface of the first pressing plate 120 to move the first pressing pad 110 so as to contact one surface of the first pocket portion 11.

For example, the first driving member 310 may provide forward driving force to move the first pressing unit 100 to the other side (3 o'clock direction in FIG. 4) such that the first pressing unit 100 faces one surface of the first pocket portion 11 and backward driving force to move the first pressing unit 100 to one side (9 o'clock direction in FIG. 4) such that the first pressing unit 100 is spaced apart from one surface of the first pocket portion 11.

The first driving member 310 may provide movement driving force to the first pressing plate 120 such that the first pressing plate 120 is moved toward the first pocket portion 11 simultaneously with driving of the first pressing pad 110, and pressing force that the first pressing pad 110 applies to one surface of the first pocket portion 11 may be provided in accordance with the amount of forward driving provided by the first driving member 310.

At this time, the first embossments 111 formed on the first pressing pad 110 may enable the first pressing pad 110 to uniformly press one surface of the first pocket portion 11.

The second driving member 320 may be configured to drive the second pressing unit 200. More specifically, the second driving member 320 may be connected to the other surface of the second pressing plate 220 to move the second pressing pad 210 so as to contact the other surface of the first pocket portion 11.

For example, the second driving member 320 may provide forward driving force to move the second pressing unit 200 to one side (9 o'clock direction in FIG. 4) such that the second pressing unit 200 presses the other surface of the first pocket portion 11 and backward driving force to move the second pressing unit 200 to the other side (3 o'clock direction in FIG. 4) such that the second pressing unit 200 is spaced apart from the other surface of the first pocket portion 11.

The second driving member 320 may provide movement driving force to the second pressing plate 220 such that the second pressing plate 220 is moved toward the first pocket portion 11 and at the same time the second pressing pad 210 is driven together, and pressing force that the second pressing pad 210 applies to the other surface of the first pocket portion 11 may be provided in accordance with the amount of forward driving provided by the second driving member 320.

At this time, the second embossments 211 formed on the second pressing pad 210 may enable the second pressing pad 210 to uniformly press the other surface of the first pocket portion 11.

As an example, each of the first driving member 310 and the second driving member 320 may be a cylinder. However, each of the first driving member and the second driving member is not particularly restricted as long as it is possible to perform the aforementioned movement.

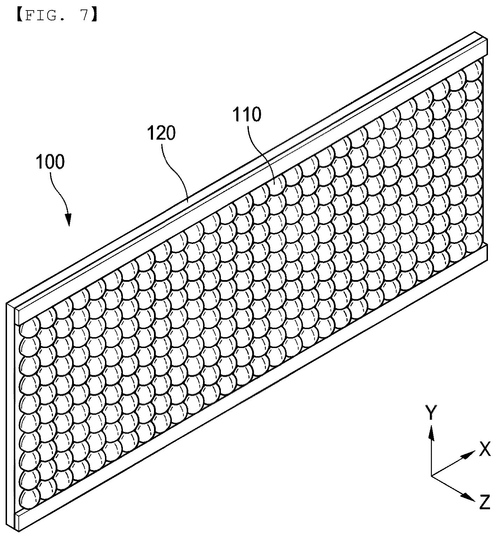

FIG. 7 is a front view of a modification of the first embodiment of the present invention, illustrating that the first pressing pad is received in a receiving portion of the first pressing plate.

This modification is identical to the first embodiment described above, except for the first pressing plate 120 and the second pressing plate 220.

The first pressing plate 120 may be provided with a receiving portion formed at one side of the first pressing plate 120 and a part thereof being depressed such that the first pressing pad 110 can be received in the receiving portion. In this case, the depression depth of the receiving portion is preferably less than the protruding height of the first embossment 111.

The receiving portion may be formed in a shape corresponding to the shape of the first pressing pad 110 such that the first pressing pad 110 can be received therein.

Due to the first pressing plate 120 having the receiving portion formed therein, the first pressing pad 110 may be detached from or attached to the receiving portion of the first pressing plate 120.

In addition, the second pressing plate 220 may be provided with a receiving portion formed at the other side of the second pressing plate 220 and a part thereof being depressed such that the second pressing pad 210 can be received in the receiving portion. In this case, the depression depth of the receiving portion is preferably less than the protruding height of the second embossment 211.

The receiving portion may be formed in a shape corresponding to the shape of the second pressing pad 210 such that the second pressing pad 210 can be received therein. Due to the second pressing plate 220 having the receiving portion formed therein, the second pressing pad 210 may be detached from or attached to the receiving portion of the second pressing plate 220.

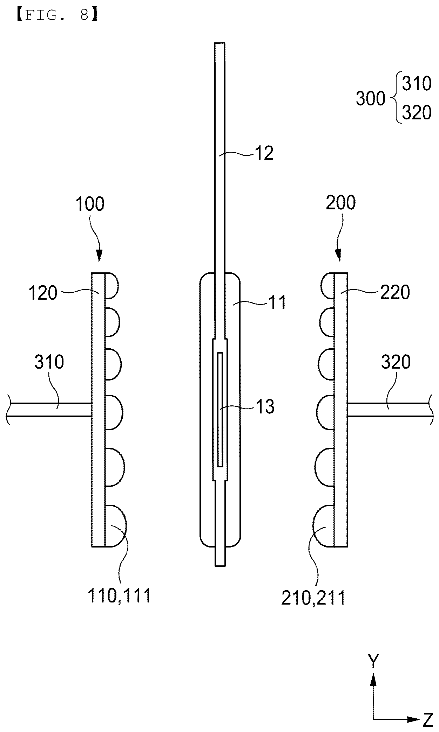

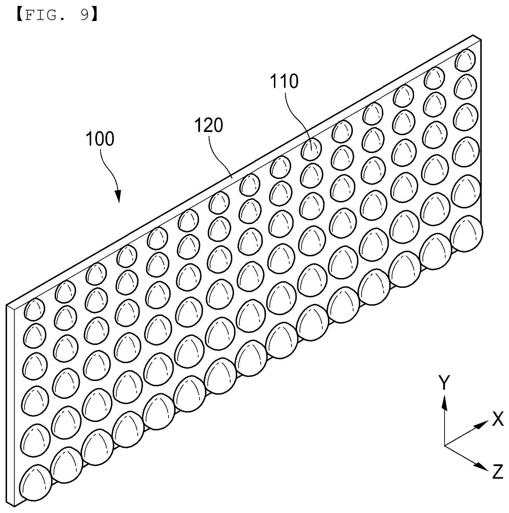

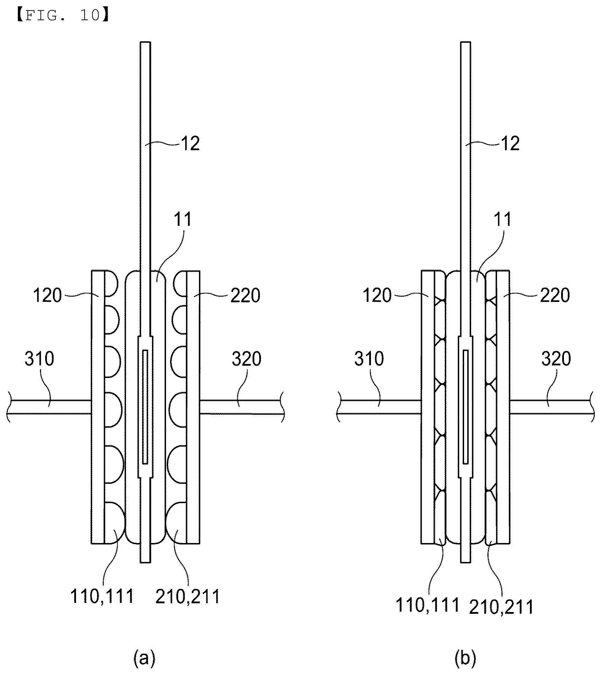

FIG. 8 is a front view showing the state in which a pressing apparatus according to a second embodiment of the present invention is located on one side and the other side of a first pocket portion of a pouch-shaped secondary battery, and FIG. 9 is a perspective view of a first pressing unit of the pressing apparatus according to the second embodiment of the present invention. In addition, FIG. 10 is a front view showing that the pressing apparatus according to the second embodiment of the present invention presses the first pocket portion of the pouch-shaped secondary battery.

The pouch-shaped secondary battery pressing apparatus according to the second embodiment of the present invention includes a first pressing unit 100, a second pressing unit 200, and a driving unit 300, in the same manner as the first embodiment.

However, in the second embodiment, when the pouch-shaped secondary battery 10 is located in the vertical direction, the first embossments 111 of the first pressing pad 110 and the second embossments 211 of the second pressing pad 210 may be formed so as to be closer to the first pocket portion 11 with decreasing distance from the lower side (6 o'clock direction in FIG. 8), unlike the first embodiment.

Here, when the pouch-shaped secondary battery 10 is located in the vertical direction, the direction toward the second pocket portion 12 is the upper side (12 o'clock direction in FIG. 8) and the direction toward the first pocket portion 11 is the lower side (6 o'clock direction in FIG. 8).

For example, the first embossments 111 of the first pressing pad 110 and the second embossments 211 of the second pressing pad 210 may be configured to be inclined at a certain angle, rather than being parallel to the pouch-shaped secondary battery 10, so as to be closer to the first pocket portion 11 with decreasing distance from the lower side.

In addition, as another example, the first pressing plate 120 and the second pressing plate 220 are formed in an inclined shape so as to protrude toward the first pocket portion 11 with decreasing distance from the lower side such that the first embossments 111 of the first pressing pad 110 and the second embossments 211 of the second pressing pad 210 are closer to the first pocket portion 11 with decreasing distance from the lower side.

More preferably, the first embossments 111 and the second embossments 211 may be formed so as to have protruding heights gradually increasing with decreasing distance from the lower side (6 o'clock direction in FIG. 8). The first embossment 111 and the second embossment 211 may have protruding heights gradually decreasing toward the upper side (12 o'clock direction in FIG. 8).

Here, the protrusion height of the first embossment 111 refers to a height protruding from the first pressing plate 120 toward the first pocket portion 11 on the other side (3 o'clock direction in FIG. 8), and the protrusion height of the second embossment 211 refers to a height protruding from the second pressing plate 220 toward the first pocket portion 11 on one side (9 o'clock direction in FIG. 8).

As described above, as the first embossments 111 and the second embossments 211 are configured to be closer to the first pocket portion 11 with decreasing distance from the lower side, the first embossments 111 and the second embossments 211 first contact the lower end of the first pocket portion 11 when the first pressing unit 100 and the second pressing unit 200 press the first pocket portion 11, and therefore the first pocket portion 11 may be sequentially pressed from the lower end toward the upper end.

In addition, of course, the first embossments 111 and the second embossments 211 may have protruding heights and sizes gradually increasing toward the lower side.

Each of the first pressing pad 110 and the second pressing pad 210 may be formed such that the distance between the plurality of first embossments 111 and the plurality of second embossments 211 gradually increases toward the lower side.

As shown in FIG. 10, when the first pressing pad 110 presses one surface of the first pocket portion 11, the lowermost first embossment 111 may first contact one surface of the first pocket portion 11, and then the other first embossments 111 may sequentially contact one surface of the first pocket portion toward the upper side, thereby pressing one surface of the first pocket portion 11. At this time, since the lowermost first embossment 111 continues to press the first embossment 111 until the uppermost first embossment 111 presses one surface of the first pocket portion 11, the other surface of the first embossment, which convexly protrudes, may be pressed and spread along one surface of the first pocket portion 11. Accordingly, the first pressing pad 110 may set the distance between the first embossments 111 based on the protrusion height and size of the first embossments 111.

The second pressing pad 210 may have the same configuration as the first pressing pad 110 described above, and the distance between the second embossments 211 may be set based on the protrusion height and size of the second embossments 211.

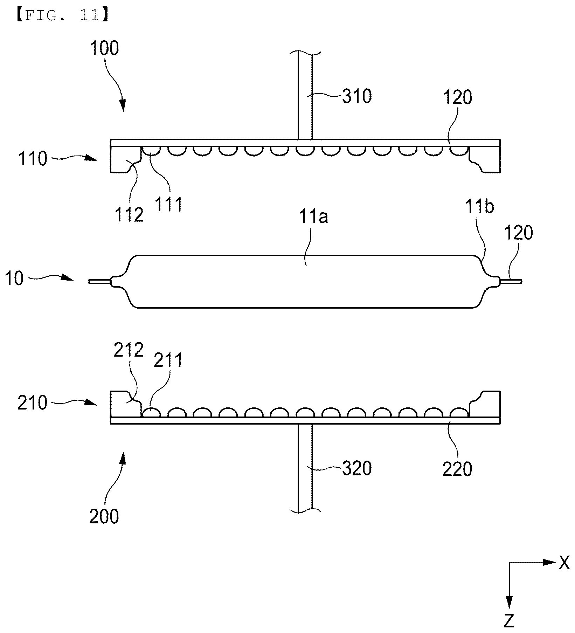

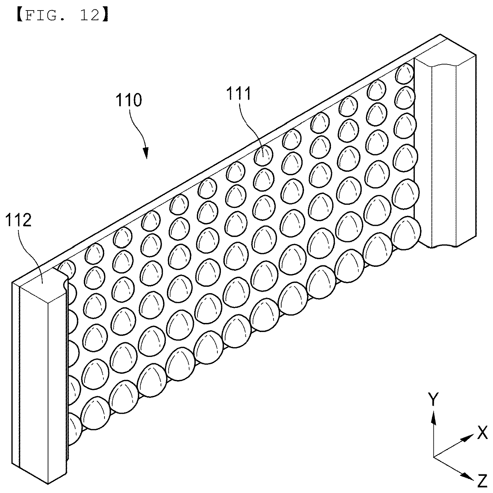

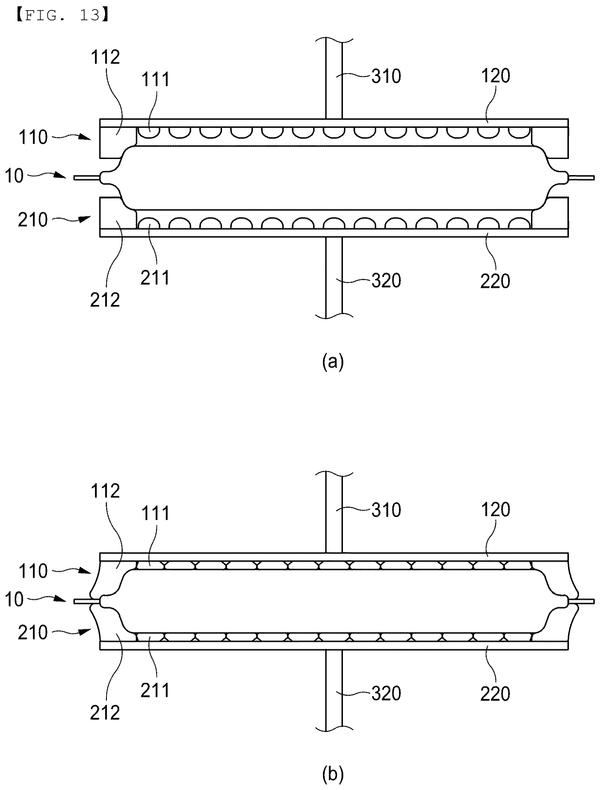

FIG. 11 is a view showing the state in which a pressing apparatus according to a third embodiment of the present invention is located on one side and the other side of a first pocket portion of a pouch-shaped secondary battery, when viewed from above, FIG. 12 is a perspective view of a first pressing unit of the pressing apparatus according to the third embodiment of the present invention, and FIG. 13 is a view showing that the pressing apparatus according to the third embodiment of the present invention presses the first pocket portion of the pouch-shaped secondary battery.

The pouch-shaped secondary battery pressing apparatus according to the third embodiment of the present invention includes a first pressing unit 100, a second pressing unit 200, and a driving unit 300, in the same manner as the first embodiment and the second embodiment.

However, in the third embodiment, the first pressing pad 110 may further include a first ridge portion 112 and the second pressing pad 210 may further include a second ridge portion 212, unlike the first and second embodiments.

The first ridge portion 112 of the first pressing pad 110 may be configured to press a rounded sliding portion 11b of one surface of the first pocket portion 11, and the second ridge portion 212 of the second pressing pad 210 may be configured to press a rounded sliding portion 11b of the other surface of the first pocket portion 11. In this case, the first embossments 111 formed on the first pressing pad 110 and the second embossments 211 formed on the second pressing pad 210 may press flat portions 11a of both surfaces of the first pocket portion 11.

Each of the first ridge portion 112 and the second ridge portion 212 may be formed in a shape corresponding to the rounded shape of the sliding portion 11b, and the first ridge portion 112 and the second ridge portion 212 may protrude farther than the protrusion heights of the first embossments 111 and the second embossments 211. More specifically, the first ridge portion 112 and the second ridge portion 212 may protrude farther than the projection height of the lowermost first embossment 111 and second embossment 211.

For example, the first ridge portion 112 and the second ridge portion 212 may protrude farther from the first embossments 111 and the second embossments 211 by a height difference between the lowest height of the sliding portion 11b and the height of the flat portion 11a.

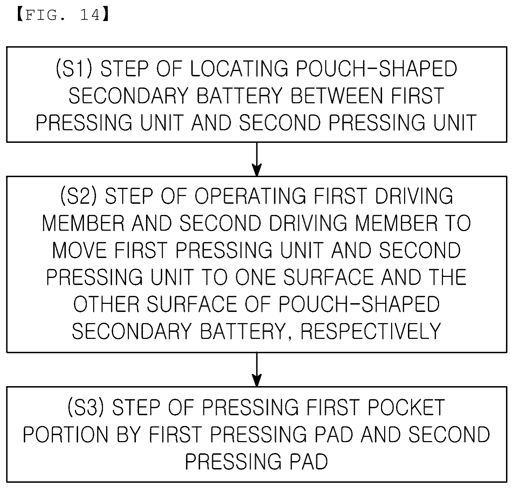

FIG. 14 is a flowchart illustrating a method of pressing a pouch-shaped secondary battery using the pressing apparatus according to the present invention.

The pressing method using the pressing apparatus according to the second embodiment will be described by way of example with reference to FIGs. 8 to 10 and 14. The pouch-shaped secondary battery pressing method according to the second embodiment of the present invention includes the steps of (S1) locating a pouch-shaped secondary battery 10 between the first pressing unit 100 and the second pressing unit 200, (S2) operating the first driving member 310 and the second driving member 320 to move the first pressing unit 100 and the second pressing unit 200 to one surface and the other surface of the pouch-shaped secondary battery 10, respectively, and (S3) pressing a first pocket portion 11 by the first pressing pad 110 and the second pressing pad 210.

In step (S2), the first driving member 310 may move the first pressing unit 100 to the other side (3 o'clock direction in FIG. 8) such that the first pressing unit 100 contacts one surface of the first pocket portion 11, and the second driving member 320 may move the second pressing unit 200 to one side (9 o'clock direction in FIG. 8) such that the second pressing unit 200 contacts the other surface of the first pocket portion 11.

Also, in step (S3), the first driving member 310 may move the first pressing unit 100 farther to the other side such that the first pressing pad 110 presses one surface of the first pocket portion 11, and the second driving member 320 may move the second pressing unit 200 farther to one side such that the second pressing pad 210 presses the other surface of the first pocket portion 11.

At this time, the lower side of the first pocket portion 11 may first contact the first pressing pad 110 and the second pressing pad 210. In other words, in step (S3), the first embossment 111 located at the lowermost side of the first pressing pad 110 and the second embossment 211 at the lowermost side of the second pressing pad 210 may first contact the first pocket portion 11.

Accordingly, when the first pressing unit 100 and the second pressing unit 200 press the first pocket portion 11, the lowermost first embossment 111 and the lowermost second embossment 211 first contact the lower side of the first pocket portion 11, and then the other embossments sequentially press the first pocket portion 11 from the lower end toward the upper end.

As a result, the gas present in the first pocket portion 11 may be moved from the bottom to the top, i.e., to a second pocket portion 12, by the first embossments 111 of the first pressing pad 110 and the second embossments 211 of the second pressing pad 210. Of course, since an electrolyte solution received in the first pocket portion 11 is also moved to the top by the pressing of the first embossments 111 and the second embossments 211, efficiency of impregnation of an electrode assembly with the electrolyte solution may also be improved.

A pressing method using the pouch-shaped secondary battery pressing apparatus according to the third embodiment of the present invention shown in FIGs. 11 to 13 is identical to the pouch-shaped secondary battery pressing method described above.

However, in step (S3), the first pressing pad 110 and the second pressing pad 210 may contact the sliding portions 11b of one surface and the other surface of the first pocket portion 11.

In other words, in step (S3), the first ridge portion 112 of the first pressing pad 110 may contact the sliding portion 11b of one surface of the first pocket portion 11, and the second ridge portion 212 of the second pressing pad 210 may contact the sliding portion 11b of the other surface of the first pocket portion 11.

At this time, the first ridge portion 112 and the second ridge portion 212 may press the sliding portions 11b of the first pocket portion 11, whereby it is possible to effectively remove even gas located in the sliding portion 11b.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Symbols)

10: Pouch-shaped secondary battery
11: First pocket portion
11a: Flat portion 11b: Sliding portion
12: Second pocket portion
13: Electrode lead
100: First pressing unit
110: First pressing pad
111: First Embossment 112: First ridge portion
120: First pressing plate
200: Second pressing unit
210: Second pressing pad
211: Second embossment 212: Second ridge portion
220: Second pressing plate
300: Driving unit
310: First driving member
320: Second driving member
S1: First sealed portion
S2: Second sealed portion

## Claims

1. A pouch-shaped secondary battery pressing apparatus for pressing a pouch-shaped secondary battery comprising a first pocket portion configured to receive an electrode assembly having a pair of electrode leads opposite to each other and a first sealed portion at an edge of the first pocket portion, the pouch-shaped secondary battery pressing apparatus comprising:
a first pressing unit configured to press one surface of the first pocket portion; and
a second pressing unit configured to press an other surface of the first pocket portion, wherein
the first pressing unit has a first pressing pad with a plurality of first embossments facing the one surface of the first pocket portion, and
the second pressing unit has a second pressing pad with a plurality of second embossments facing the other surface of the first pocket portion.

2. The pouch-shaped secondary battery pressing apparatus according to claim 1, wherein, when the pouch-shaped secondary battery is in a vertical direction, the first embossments and the second embossments are closer to the first pocket portion with decreasing distance from a lower side.

3. The pouch-shaped secondary battery pressing apparatus according to claim 2, wherein the first embossments and the second embossments have protruding heights gradually increasing with decreasing distance from the lower side.

4. The pouch-shaped secondary battery pressing apparatus according to claim 2, wherein each of the first pressing pad and the second pressing pad is made of an elastic member.

5. The pouch-shaped secondary battery pressing apparatus according to claim 4, wherein the elastic member comprises a silicone material.

6. The pouch-shaped secondary battery pressing apparatus according to claim 4, wherein the first embossments and the second embossments are configured to temporarily flatten when contacting the first pocket portion.

7. The pouch-shaped secondary battery pressing apparatus according to claim 2, wherein
the first pressing pad comprises a first ridge portion configured to press a rounded sliding portion of the one surface of the first pocket portion, and
the second pressing pad comprises a second ridge portion configured to press a rounded sliding portion of the other surface of the first pocket portion.

8. The pouch-shaped secondary battery pressing apparatus according to claim 7, wherein each of the first ridge portion and the second ridge portion is in a shape corresponding to the rounded shape of the sliding portion.

9. The pouch-shaped secondary battery pressing apparatus according to claim 2, wherein
the first pressing unit comprises a first pressing plate at one surface of the first pressing pad, the first pressing plate being configured to support the first pressing pad, and
the second pressing unit comprises a second pressing plate at an other surface of the second pressing pad, the second pressing plate being configured to support the second pressing pad.

10. The pouch-shaped secondary battery pressing apparatus according to claim 9, further comprising:
a driving unit comprising a first driving member configured to drive the first pressing unit and a second driving member configured to drive the second pressing unit, wherein
the first driving member is connected to one surface of the first pressing plate and is configured to move the first pressing pad so as to face the one surface of the first pocket portion, and
the second driving member is connected to the other surface of the second pressing plate and is configured to move the second pressing pad so as to face the other surface of the first pocket portion.

11. A pouch-shaped secondary battery pressing method using the pouch-shaped secondary battery pressing apparatus according to any one of claims 1 to 10, the pouch-shaped secondary battery pressing method comprising:
(S1) locating a pouch-shaped secondary battery between the first pressing unit and the second pressing unit;
(S2) operating the first driving member and the second driving member to move the first pressing unit and the second pressing unit to one surface and an other surface of the pouch-shaped secondary battery, respectively; and
(S3) pressing a first pocket portion by the first pressing pad and the second pressing pad.

12. The pouch-shaped secondary battery pressing method according to claim 11, wherein, in step (S3), a lower side of the first pocket portion first contacts the first pressing pad and the second pressing pad.

13. The pouch-shaped secondary battery pressing method according to claim 11, wherein, in step (S3), the first pressing pad and the second pressing pad contact sliding portions of the one surface and the other surface of the first pocket portion.
